(19) Europäisches Patentamt
European Patent Office
Office européen des brevets

(11) EP 2 353 386 A1

(12) EUROPÄISCHE PATENTANMELDUNG

(43) Veröffentlichungstag:
**10.08.2011 Patentblatt 2011/32**

(51) Int Cl.:
***A01N 43/40*** *(2006.01)* ***A01N 43/90*** *(2006.01)*
***A01N 65/00*** *(2009.01)* ***A01P 7/04*** *(2006.01)*

(21) Anmeldenummer: **10152723.2**

(22) Anmeldetag: **05.02.2010**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(71) Anmelder: **Bayer CropScience AG**
**40789 Monheim (DE)**

(72) Erfinder: **Die Erfindernennung liegt noch nicht vor**

(54) **Wirkstoffkombination enthaltend Azadirachtin und eine substituierte Enaminocarbonylverbindung**

(57) Die vorliegende Erfindung betrifft neue Wirkstoffkombinationen, die mindestens eine bestimmte substituierte Enaminocarbonylverbindung und Azadirachtin enthält und sehr gut zur Bekämpfung von tierischen Schädlingen wie Insekten und unerwünschten Akariden geeignet sind.

EP 2 353 386 A1

## Beschreibung

Die vorliegende Erfindung betrifft neue Wirkstoffkombinationen, die mindestens eine bestimmte substituierte Enaminocarbonylverbindung und Azadirachtin enthält und sehr gut zur Bekämpfung von tierischen Schädlingen wie Insekten und unerwünschten Akariden geeignet sind.

Die Erfindung betrifft auch Verfahren zur Bekämpfung tierischer Schädlinge auf Pflanzen und Saatgut, die Verwendung der erfindungsgemäßen Wirkstoffkombinationen zur Behandlung von Saatgut, ein Verfahren zum Schutz von Saatgut und nicht zuletzt das mit den erfindungsgemäßen Wirkstoffkombinationen behandelte Saatgut.

Es ist aus EP-A-0 539 588 und WO 2007/115644 bekannt, substituierte Enaminocarbonylverbindungen als Pflanzenschutzmittel zur Bekämpfung von Insekten und Akariden zu verwenden. Gleichfalls ist bekannt, substituierte Enaminocarbonylverbindungen zusammen mit anderen Insektiziden zu verwenden. So beschreibt beispielsweise WO 2009/043443 Wirkstoffkombinationen die bestimmte substituierte Enaminocarbonylverbindungen und bestimmte Neonicotinoid Insektizide, wie beispielsweise Clothianidin oder Thiamethoxam, enthalten.

Es ist bereits ebenfalls bekannt, dass die Extrakte aus den Samen des Neem-Baumes insektizide Eigenschaften besitzen (vgl. "Römpp Chemie Lexikon", 9. Auflage, Seite 2954, Georg Thieme Verlag, Stuttgart-New York, 1991). Die Wirkung des Neem-Baumextraktes wird im Allgemeinem dem Vorhandensein von Azadirachtin zugeordnet. Azadirachtin gehört zu den Limonoiden und ist ein sekundärer Metabolit. Azadirachtin ist ein hoch oxidiertes Tetranortriterpenoid mit Enolether-, Acetal-, Halbacteal- und Epoxid-Funktionen. Azadirachtin zeigt vor allem Ecdysonartige Wirkung, d.h. es hemmt die Larvenentwicklung verschiedener Insekten (Z. Naturforsch., Teil C, 42, 4 (1987)). Nachteilig an Azadirachtin ist, dass die Wirkung diese Wirkstoffs nur verzögert eintritt und bei niedrigen Aufwandmengen die Wirksamkeit in manchen Fällen zu wünschen übrig lässt.

Die Wirkung der bekannten substituierte Enaminocarbonylverbindungen und von Azadirachtin ist im Allgemeinen gut. Insbesondere bei niedrigen Aufwandmengen und bei bestimmten Schädlingen befriedigen sie jedoch nicht immer die Bedürfnisse der landwirtschaftlichen und gartenbaulichen Praxis, und es besteht immer noch ein Bedarf an einer ökonomisch effizienten und ökologisch sicheren Schädlingsbekämpfung.

Da sich aber die ökologischen und ökonomischen Anforderungen an moderne Pflanzenbehandlungsmittel laufend erhöhen, beispielsweise was Toxizität, Selektivität, Aufwandmenge, Rückstandsbildung und günstige Herstellbarkeit angeht, und außerdem z.B. Probleme mit Resistenzen auftreten können, besteht die ständige Aufgabe neue Pflanzenbehandlungsmittel zu entwickeln, die zumindest in Teilbereichen Vorteile gegenüber den bekannten aufweisen.

Aufgabe der vorliegenden Erfindung ist deshalb die Bereitstellung von weiteren Insektiziden die gegenüber bekannten Wirkstoffkombinationen eine verbesserte Wirkung bzw. ein verbreitertes Wirkspektrum zeigen und die vorgenannten Nachteile vermeiden.

Die Erfinder haben nun gefunden, dass eine Kombination bestimmter substituierter Enaminocarbonylverbindungen mit dem im Extrakt der Samen des Neem-Baumes vorhandenen Wirkstoff Azadirachtin neben einer synergistischen Wirkungssteigerung, ein verbreitertes Wirkspektrum aufweist. Gleichfalls wurde gefunden, dass durch die erfindungsgemäße Wirkstoffkombination der Wirkungsverlauf des Azadirachtins beschleunigt wird. Des Weiteren kann eine Verbesserung der Wirkdauer beobachtet werden. Die Erfindung bezieht sich deshalb auf eine Wirkstoffkombination enthaltend mindestens eine substituierte Enaminocarbonylverbindung der Formel (1-1), (1-2) oder (1-3) und Azadirachtin. Azadirachtin kann dabei in Form des reinen Wirkstoffes oder als Formulierung, enthaltend Azadirachtin oder in Form des Extraktes der Samen des Neem-Baumes sowie deren Formulierungen enthalten sein.

Die erfindungsgemäßen substituierten Enaminocarbonylverbindungen 4-{ [(6-Chlorpyrid-3-yl)methyl](2,2-difluorethyl)amino}furan-2(5H)-on (Verbindung (I-1)), dessen insektizide Wirkung erstmals in WO 2007/115644 beschrieben ist; 4-{ [(6-Chlorpyrid-3-yl)methyl](cyclopropyl)amino}furan-2(5H)-on (Verbindung (I-2)) und 4-{[(6-Chlorpyrid-3-yl) methyl](methyl)amino}furan-2(5H)-on (Verbindung (1-3)) deren insektizide Wirkung erstmals in EP-A-0 539 588 beschrieben ist. Die Verbindungen lassen sich nach den in W02007/115644 und EP-A-0539588 beschriebenen Verfahren herstellen und sie besitzen die folgenden Strukturen:

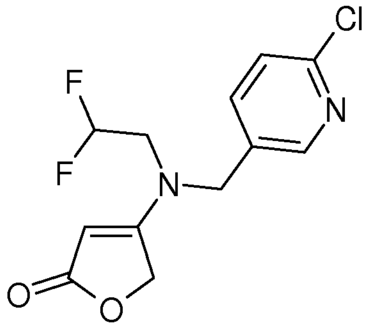 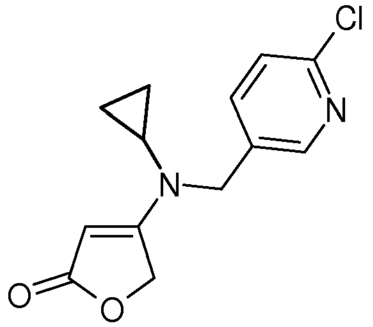 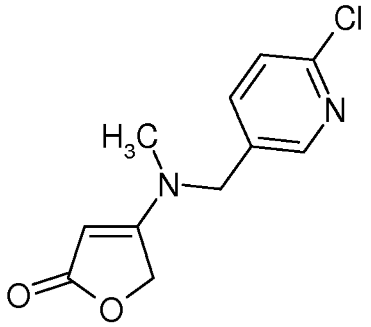

(I-1) (I-2) (I-3)

Zusätzlich zu der oben beschriebenen Wirkung können die erfindungsgemäßen Wirkstoffkombinationen noch weitere überraschende Vorteile zeigen, einschließlich einer erhöhten Anwendungssicherheit; einer verminderten Phytotoxizität und somit einer besseren Pflanzenverträglichkeit; der Bekämpfung von Schädlingen in ihren verschiedenen Entwicklungsstadien; eines besseren Verhaltens während der Herstellung der insektiziden Verbindungen, zum Beispiel während des Vermahlens oder des Mixens, während ihrer Lagerung oder während ihrer Anwendung; eines sehr vorteilhaften bioziden Spektrums selbst bei niedrigen Konzentrationen mit damit einhergehender guter Verträglichkeit durch Warmblüter, Fische und Pflanzen; und des Erzielens einer zusätzlichen Wirkung, zum Beispiel einer algiziden, anthelmintischen, aviziden, bakteriziden, fungiziden, molluskiziden, nematiziden, pflanzenaktivierenden, rodentiziden oder viruziden Wirkung.

Weiterhin wurde gefunden, dass sich die erfindungsgemäßen Wirkstoffkombinationen besonders zum Schutz von Samen und/oder Sprösslingen und Blättern einer aus den Samen herangezogenen Pflanze gegen eine Schädigung durch Schädlinge eignet. Die erfindungsgemäßen Wirkstoffkombinationen zeigen somit eine vernachlässigbare Phytotoxizität bei der Anwendung auf das Pflanzenfortpflanzungsmaterial, eine Verträglichkeit mit Bodenbedingungen (z.B. was die Bindung der Verbindung an den Boden betrifft), eine systemische Wirkung in der Pflanze, keinen negativen Einfluss auf die Keimung und Wirksamkeit während des entsprechenden Schädlingslebenszyklus.

In einer Ausführungsform bezieht sich die Erfindung auf eine Wirkstoffkombination, die im Wesentlichen aus 4-{ [(6-Chlorpyrid-3-yl)methyl](2,2-difluorethyl)amino}furan-2(5H)-on (Verbindung (I-1)) und Azadirachtin besteht, bevorzugt in einem die Wirkung von Azadirachtin beschleunigenden Verhältnis.

In einer weiteren Ausführungsform bezieht sich die Erfindung auf eine Wirkstoffkombination, die im Wesentlichen aus 4-{[(6-Chlorpyrid-3-yl)methyl](cyclopropyl)amino}furan-2(5H)-on (Verbindung (I-2)) und Azadirachtin besteht, bevorzugt in einem die Wirkung von Azadirachtin beschleunigenden Verhältnis.

In einer noch weiteren Ausführungsform bezieht sich die Erfindung auf eine Wirkstoffkombination, die im Wesentlichen aus 4-{[(6-Chlorpyrid-3-yl)methyl](methyl)amino}furan-2(5H)-on (Verbindung (1-3)) und Azadirachtin besteht, bevorzugt in einem die Wirkung von Azadirachtin beschleunigenden Verhältnis.

Erfindungsgemäß bevorzugt enthält die erfindungsgemäße Wirkstoffkombination eine der Verbindungen der Formel (I-1), (1-2) oder (1-3) und Azadirachtin in einem Mischungsverhältnis im Bereich von etwa 125:1 bis etwa 1:125, besonders bevorzugt im Bereich von etwa 25:1 bis etwa 1:25, ganz besonders bevorzugt im Bereich von etwa 5:1 bis etwa 1:5.

Verbindungen der Formel (I-1), (1-2) oder (1-3) mit wenigstens einem basischen Zentrum sind dazu in der Lage, beispielsweise Säureadditionssalze zu bilden, z.B. mit starken anorganischen Säuren wie Mineralsäuren, z.B. Perchlorsäure, Schwefelsäure, Salpetersäure, salpetriger Säure, einer Phosphorsäure oder einer Halogenwasserstoffsäure, mit starken organischen Carbonsäuren wie unsubstituierten oder substituierten, z.B. halogensubstituierten, $C_1$-$C_4$-Alkancarbonsäuren, z.B. Essigsäure, gesättigten oder ungesättigten Dicarbonsäuren, z.B. Oxalsäure, Malonsäure, Bernsteinsäure, Maleinsäure, Fumarsäure und Phthalsäure, Hydroxycarbonsäuren, z.B. Ascorbinsäure, Milchsäure, Äpfelsäure, Weinsäure und Citronensäure, oder Benzoesäure, oder mit organischen Sulfonsäuren wie unsubstituierten oder substituierten, z.B. halogensubstituierten, $C_1$-$C_4$-Alkan- oder Arylsulfonsäuren, z.B. Methan- oder p-Toluolsulfonsäure. Die Verbindungen der Formel (1-1), (1-2) oder (1-3) mit wenigstens einer sauren Gruppe sind dazu in der Lage, zum Beispiel Salze mit Basen zu bilden, z.B. Metallsalze wie Alkali- oder Erdalkalisalze, z.B. Natrium-, Kalium- oder Magnesiumsalze, oder Salze mit Ammoniak oder einem organischen Amin wie Morpholin, Piperidin, Pyrrolidin, einem niederen Mono-, Di- oder Trialkylamin, z.B. Ethyl-, Diethyl-, Triethyl- oder Dimethylpropylamin, oder einem niederen Mono-, Di- oder Trihydroxyalkylamin, z.B. Mono-, Di- oder Triethanolamin. Darüber hinaus können gegebenenfalls entsprechende innere Salze gebildet werden. Im Rahmen der Erfindung sind agrochemisch vorteilhafte Salze bevorzugt. Angesichts der engen Beziehung zwischen den Verbindungen der Formel (I-1), (1-2) oder (1-3) in freier Form und in

Form ihrer Salze sollte oben und im folgenden jeder Verweis auf die freien Verbindungen der Formel (I-1), (1-2) oder (1-3) oder auf ihre Salze so verstanden werden, dass auch die entsprechenden Salze bzw. die freien Verbindungen der Formel (1-1), (1-2) oder (1-3) eingeschlossen sind, wenn dies angebracht und zweckmäßig ist. Dies trifft entsprechend auch auf mögliche Tautomere der Verbindungen der Formel (I-1), (1-2) oder (1-3) und auf ihre Salze zu.

Unter Extrakten aus Samen des Neem-Baumes sind im vorliegenden Fall alle üblichen aus den Samen des Neem-Baumes durch Extraktion oder Auspressen isolierbarer Produkte zu verstehen, die wesentliche Mengen an Azadirachtin enthalten. Bei dem Extraktionsprozess entstehen auch Neben-Produkte, die ebenfalls Azadirachtin enthalten wie z.B. das Neem-Öl oder der feste Rückstandskuchen, der im Wesentlichen die festen Bestandteile der Neem-Samen enthält und oft als Dünger eingesetzt wird. Das Exraktionsprodukt enthält die verschiedenen Azadirachtin-Isomeren A bis K, jeoch hauptsächlich Azadirachtin A. Im Rahmen dieser Erfindung sind unter Azadirachtin-haltigen Produkten nicht nur das Exraktionsprodukt selber, sondern auch die Neben-Produkte zu verstehen. Dabei können sowohl die Extraktsprodukte als auch die Neben-Produkte in Formulierungen vorliegen, die ebenfalls erfindungsgemäß eingesetzt werden können. Der Anteil von Azadirachtin A (Molekulargewicht 720,7 g/mol) dient zur Charakterisierung der im Markt befindlichen Produkte. Der Anteil der Isomern kann über HPLC bestimmt werden. Bevorzugt werden Produkte eingesetzt, die einen Anteil von 20 % bis 50 %, bevorzugt 25 % bis 40 %, besonders bevorzugt 30 % bis 40 % Azadirachtin A aufweisen. Besonders bevorzugt ist NeemAzal® technical der Fa. Trifolio-M GmbH.

Im Rahmen der vorliegenden Erfindung steht der Begriff "Wirkstoffkombination" für verschiedene Kombinationen von Verbindungen der Formel (I-1), (1-2) oder (1-3) und Azadirachtin z.B. in Form einer einzelnen Fertigmischung ("Ready-Mix"), in einer kombinierten Spraymischung, die zusammengesetzt ist aus getrennten Formulierungen der einzelnen Wirkstoffe, z.B. einer Tankmischung ("Tank-Mix") oder in einer kombinierten Verwendung der einzelnen Wirkstoffe, wenn diese sequentiell appliziert werden, z.B. nacheinander innerhalb eines angemessen kurzen Zeitraums, z.B. wenigen Stunden oder Tagen. Gemäß einer bevorzugten Ausführungsform ist die Reihenfolge der Applikation der Verbindungen der Formel (I-1), (1-2) oder (1-3) und Azadirachtin für die Ausführung der vorliegenden Erfindung nicht entscheidend.

Beim Einsatz der erfindungsgemäßen Wirkstoffkombinationen als Insektizide und Akarizide können die Aufwandmengen je nach Applikationsart innerhalb eines größeren Bereiches variiert werden. Die Aufwandmenge der erfindungsgemäßen Wirkstoffkombinationen beträgt bei der Behandlung von Pflanzenteilen, z.B. Blättern und von Schädlingen von 0,1 bis 10.000 g/ha, bevorzugt von 10 bis 1.000 g/ha, besonders bevorzugt von 50 bis 300g/ha (bei Anwendung durch Gießen oder Tropfen kann die Aufwandmenge sogar verringert werden, vor allem wenn inerte Substrate wie Steinwolle oder Perlit verwendet werden); bei der Saatgutbehandlung von 2 bis 200 g pro 100 kg Saatgut, bevorzugt von 3 bis 150 g pro 100 kg Saatgut, besonders bevorzugt von 2,5 bis 25 g pro 100 kg Saatgut, ganz besonders bevorzugt von 2,5 bis 12,5 g pro 100 kg Saatgut; bei der Bodenbehandlung von 0,1 bis 10.000 g/ha, bevorzugt von 1 bis 5.000 g/ha.

Die erfindungsgemäßen Wirkstoffkombinationen können eingesetzt werden, um Pflanzen innerhalb eines gewissen Zeitraumes nach der Behandlung gegen den Befall durch die genannten tierischen Schädlinge zu schützen. Der Zeitraum, innerhalb dessen Schutz herbeigeführt wird, erstreckt sich im Allgemeinen auf 1 bis 42 Tage, bevorzugt auf 1 bis 28 Tage, besonders bevorzugt auf 1 bis 14 Tage nach der Behandlung der Pflanzen und/oder Schädlinge mit den Wirkstoffen bzw. auf bis zu 200 Tage nach einer Saatgutbehandlung.

Die erfindungsgemäßen Wirkstoffe eignen sich bei guter Pflanzenverträglichkeit, günstiger Warmblütertoxizität und guter Umweltverträglichkeit zum Schutz von Pflanzen und Pflanzenorganen, zur Steigerung der Ernteerträge, Verbesserung der Qualität des Erntegutes und zur Bekämpfung von tierischen Schädlingen, insbesondere Insekten, Spinnentieren, Helminthen, Nematoden und Mollusken, die in der Landwirtschaft, im Gartenbau, bei der Tierzucht, in Forsten, in Gärten und Freizeiteinrichtungen, im Vorrats- und Materialschutz sowie auf dem Hygienesektor vorkommen.

Sie können vorzugsweise als Pflanzenschutzmittel eingesetzt werden. Sie sind gegen normal sensible und resistente Arten sowie gegen alle oder einzelne Entwicklungsstadien wirksam. Zu den oben erwähnten Schädlingen gehören:

Aus dem Stamm Mollusca z.B. aus der Klasse der Lamellibranchiata z.B. Dreissena spp.

Aus der Klasse der Gastropoda z.B. Arion spp., Biomphalaria spp., Bulinus spp., Deroceras spp., Galba spp., Lymnaea spp., Oncomelania spp., Pomacea spp., Succinea spp..

Aus dem Stamm Arthropoda z.B. aus der Ordnung der Isopoda z.B. Armadillidium vulgare, Oniscus asellus, Porcellio scaber.

Aus der Klasse der Arachnida z.B. Acarus spp., Aceria sheldoni, Aculops spp., Aculus spp., Amblyomma spp., Amphitetranychus viennensis, Argas spp., Boophilus spp., Brevipalpus spp., Bryobia praetiosa, Centruroides spp., Chorioptes spp., Dermanyssus gallinae, Dermatophagoides pteronyssius, Dermatophagoides farinae, Dermacentor spp., Eotetranychus spp., Epitrimerus pyri, Eutetranychus spp., Eriophyes spp., Halotydeus destructor, Hemitarsonemus spp., Hyalomma spp., Ixodes spp., Latrodectus spp., Loxosceles spp., Metatetranychus spp., Nuphersa spp., Oligonychus spp., Ornithodorus spp., Ornithonyssus spp., Panonychus spp., Phyllocoptruta oleivora, Polyphagotarsonemus latus, Psoroptes spp., Rhipicephalus spp., Rhizoglyphus spp., Sarcoptes spp., Scorpio maurus, Stenotarsonemus spp., Tarsonemus spp., Tetranychus spp., Vaejovis spp., Vasates lycopersici.

Aus der Ordnung der Symphyla z.B. Scutigerella spp..

Aus der Ordnung der Chilopoda z.B. Geophilus spp., Scutigera spp..

Aus der Ordnung der Collembola z.B. Onychiurus armatus.

Aus der Ordnung der Diplopoda z.B. Blaniulus guttulatus.

Aus der Ordnung der Zygentoma z.B. Lepisma saccharina, Thermobia domestica.

Aus der Ordnung der Orthoptera z.B. Acheta domesticus, Blatta orientalis, Blattella germanica, Dichroplus spp., Gryllotalpa spp., Leucophaea maderae, Locusta spp., Melanoplus spp., Periplaneta spp., Pulex irritans, Schistocerca gregaria, Supella longipalpa.

Aus der Ordnung der Isoptera z.B. Coptotermes spp., Cornitermes cumulans, Cryptotermes spp., Incisitermes spp., Microtermes obesi, Odontotermes spp., Reticulitermes spp.,

Aus der Ordnung der Heteroptera z.B. Anasa tristis, Antestiopsis spp., Boisea spp., Blissus spp., Calocoris spp., Campylomma livida, Cavelerius spp., Cimex lectularius, Collaria spp., Creontiades dilutus, Dasynus piperis, Dichelops furcatus, Diconocoris hewetti, Dysdercus spp., Euschistus spp., Eurygaster spp., Heliopeltis spp., Horcias nobilellus, Leptocorisa spp., Leptoglossus phyllopus, Lygus spp., Macropes excavatus, Miridae, Monalonion atratum, Nezara spp., Oebalus spp., Pentomidae, Piesma quadrata, Piezodorus spp., Psallus spp., Pseudacysta persea, Rhodnius spp., Sahlbergella singularis, Scaptocoris castanea, Scotinophora spp., Stephanitis nashi, Tibraca spp., Triatoma spp.

Aus der Ordnung der Anoplura (Phthiraptera) z.B. Damalinia spp., Haematopinus spp., Linognathus spp., Pediculus spp., Ptirus pubis, Trichodectes spp..

Aus der Ordnung der Homoptera z.B. Acyrthosipon spp., Acrogonia spp., Aeneolamia spp., Agonoscena spp., Aleurodes spp., Aleurolobus barodensis, Aleurothrixus spp., Amrasca spp., Anuraphis cardui, Aonidiella spp., Aphanostigma piri, Aphis spp., Arboridia apicalis, Aspidiella spp., Aspidiotus spp., Atanus spp., Aulacorthum solani, Bemisia spp., Brachycaudus helichrysii, Brachycolus spp., Brevicoryne brassicae, Calligypona marginata, Carneocephala fulgida, Ceratovacuna lanigera, Cercopidae, Ceroplastes spp., Chaetosiphon fragaefolii, Chionaspis tegalensis, Chlorita onukii, Chromaphis juglandicola, Chrysomphalus ficus, Cicadulina mbila, Coccomytilus halli, Coccus spp., Cryptomyzus ribis, Dalbulus spp., Dialeurodes spp., Diaphorina spp., Diaspis spp., Drosicha spp., Dysaphis spp., Dysmicoccus spp., Empoasca spp., Eriosoma spp., Erythroneura spp., Euscelis bilobatus, Ferrisia spp., Geococcus coffeae, Hieroglyphus spp., Homalodisca coagulata, Hyalopterus arundinis, Icerya spp., Idiocerus spp., Idioscopus spp., Laodelphax striatellus, Lecanium spp., Lepidosaphes spp., Lipaphis erysimi, Macrosiphum spp., Mahanarva spp., Melanaphis sacchari, Metcalfiella spp., Metopolophium dirhodum, Monellia costalis, Monelliopsis pecanis, Myzus spp., Nasonovia ribisnigri, Nephotettix spp., Nilaparvata lugens, Oncometopia spp., Orthezia praelonga, Parabemisia myricae, Paratrioza spp., Parlatoria spp., Pemphigus spp., Peregrinus maidis, Phenacoccus spp., Phloeomyzus passerinii, Phorodon humuli, Phylloxera spp., Pinnaspis aspidistrae, Planococcus spp., Protopulvinaria pyriformis, Pseudaulacaspis pentagona, Pseudococcus spp., Psylla spp., Pteromalus spp., Pyrilla spp., Quadraspidiotus spp., Quesada gigas, Rastrococcus spp., Rhopalosiphum spp., Saissetia spp., Scaphoides titanus, Schizaphis graminum, Selenaspidus articulatus, Sogata spp., Sogatella furcifera, Sogatodes spp., Stictocephala festina, Tenalaphara malayensis, Tinocallis caryaefoliae, Tomaspis spp., Toxoptera spp., Trialeurodes spp., Trioza spp., Typhlocyba spp., Unaspis spp., Viteus vitifolii, Zygina spp..

Aus der Ordnung der Coleoptera z.B. Acalymma vittatum, Acanthoscelides obtectus, Adoretus spp., Agelastica alni, Agriotes spp., Alphitobius diaperinus, Amphimallon solstitialis, Anobium punctatum, Anoplophora spp., Anthonomus spp., Anthrenus spp., Apion spp., Apogonia spp., Atomaria spp., Attagenus spp., Bruchidius obtectus, Bruchus spp., Cassida spp., Cerotoma trifurcata, Ceutorrhynchus spp., Chaetocnema spp., Cleonus mendicus, Conoderus spp., Cosmopolites spp., Costelytra zealandica, Ctenicera spp., Curculio spp., Cryptorhynchus lapathi, Cylindrocopturus spp., Dermestes spp., Diabrotica spp., Dichocrocis spp., Diloboderus spp., Epilachna spp., Epitrix spp., Faustinus spp., Gibbium psylloides, Hellula undalis, Heteronychus arator, Heteronyx spp., Hylamorpha elegans, Hylotrupes bajulus, Hypera postica, Hypothenemus spp., Lachnosterna consanguinea, Lema spp., Leptinotarsa decemlineata, Leucoptera spp., Lissorhoptrus oryzophilus, Lixus spp., Luperodes spp., Lyctus spp., Megascelis spp., Melanotus spp., Meligethes aeneus, Melolontha spp., Migdolus spp., Monochamus spp., Naupactus xanthographus, Niptus hololeucus, Oryctes rhinoceros, Oryzaephilus surinamensis, Oryzaphagus oryzae, Otiorrhynchus spp., Oxycetonia jucunda, Phaedon cochleariae, Phyllophaga spp., Phyllotreta spp., Popillia japonica, Premnotrypes spp., Prostephanus truncatus, Psylliodes spp., Ptinus spp., Rhizobius ventralis, Rhizopertha dominica, Sitophilus spp., Sphenophorus spp., Stegobium paniceum, Sternechus spp., Symphyletes spp., Tanymecus spp., Tenebrio molitor, Tribolium spp., Trogoderma spp., Tychius spp., Xylotrechus spp., Zabrus spp..

Aus der Ordnung der Hymenoptera z.B. Acromyrmex spp., Athalia spp., Atta spp., Diprion spp., Hoplocampa spp., Lasius spp., Monomorium pharaonis, Solenopsis invicta, Tapinoma spp., Vespa spp..

Aus der Ordnung der Lepidoptera z.B. Acronicta major, Adoxophyes spp., Aedia leucomelas, Agrotis spp., Alabama spp., Amyelois transitella, Anarsia spp., Anticarsia spp., Argyroploce spp., Barathra brassicae, Borbo cinnara, Bucculatrix thurberiella, Bupalus piniarius, Busseola spp., Cacoecia spp., Caloptilia theivora, Capua reticulana, Carpocapsa pomonella, Carposina niponensis, Cheimatobia brumata, Chilo spp., Choristoneura spp., Clysia ambiguella,

Cnaphalocerus spp., Cnephasia spp., Conopomorpha spp., Conotrachelus spp., Copitarsia spp., Cydia spp., Dalaca noctuides, Diaphania spp., Diatraea saccharalis, Earias spp., Ecdytolopha aurantium, Elasmopalpus lignosellus, Eldana saccharina, Ephestia spp., Epinotia spp., Epiphyas postvittana, Etiella spp., Eulia spp., Eupoecilia ambiguella, Euproctis spp., Euxoa spp., Feltia spp., Galleria mellonella, Gracillaria spp., Grapholitha spp., Hedylepta spp., Helicoverpa spp., Heliothis spp., Hofmannophila pseudospretella, Homoeosoma spp., Homona spp., Hyponomeuta padella, Kakivoria flavofasciata, Laphygma spp., Laspeyresia molesta, Leucinodes orbonalis, Leucoptera spp., Lithocolletis spp., Lithophane antennata, Lobesia spp., Loxagrotis albicosta, Lymantria spp., Lyonetia spp., Malacosoma neustria, Maruca testulalis, Mamestra brassicae, Mocis spp., Mythimna separata, Nymphula spp., Oiketicus spp., Oria spp., Orthaga spp., Ostrinia spp., Oulema oryzae, Panolis flammea, Parnara spp., Pectinophora spp., Perileucoptera spp., Phthorimaea spp., Phyllocnistis citrella, Phyllonorycter spp., Pieris spp., Platynota stultana, Plodia interpunctella, Plusia spp., Plutella xylostella, Prays spp., Prodenia spp., Protoparce spp., Pseudaletia spp., Pseudoplusia includens, Pyrausta nubilalis, Rachiplusia nu, Schoenobius spp., Scirpophaga spp., Scotia segetum, Sesamia spp., Sparganothis spp., Spodoptera spp., Stathmopoda spp., Stomopteryx subsecivella, Synanthedon spp., Tecia solanivora, Thermesia gemmatalis, Tinea pellionella, Tineola bisselliella, Tortrix spp., Trichophaga tapetzella, Trichoplusia spp., Tuta absoluta, Virachola spp..

Aus der Ordnung der Diptera z.B. Aedes spp., Agromyza spp., Anastrepha spp., Anopheles spp., Asphondylia spp., Bactrocera spp., Bibio hortulanus, Calliphora erythrocephala, Ceratitis capitata, Chironomus spp., Chrysomyia spp., Chrysops spp., Cochliomyia spp., Contarinia spp., Cordylobia anthropophaga, Culex spp., Culicoides spp., Culiseta spp., Cuterebra spp., Dacus oleae, Dasyneura spp., Delia spp., Dermatobia hominis, Drosophila spp., Echinocnemus spp., Fannia spp., Gasterophilus spp., Glossina spp., Haematopota spp., Hydrellia spp., Hylemyia spp., Hyppobosca spp., Hypoderma spp., Liriomyza spp.. Lucilia spp., Lutzomia spp., Mansonia spp., Musca spp., Nezara spp., Oestrus spp., Oscinella frit, Pegomyia spp., Phlebotomus spp., Phorbia spp., Phormia spp., Prodiplosis spp., Psila rosae, Rhagoletis spp., Sarcophaga spp., Simulium spp, Stomoxys spp., Tabanus spp., Tannia spp., Tetanops spp., Tipula spp..

Aus der Ordnung der Thysanoptera z.B. Anaphothrips obscurus, Baliothrips biformis, Drepanothris reuteri, Enneothrips flavens, Frankliniella spp., Heliothrips spp., Hercinothrips femoralis, Rhipiphorothrips cruentatus, Scirtothrips spp., Taeniothrips cardamoni, Thrips spp..

Aus der Ordnung der Siphonaptera z.B. Ceratophyllus spp., Ctenocephalides spp., Tunga penetrans, Xenopsylla cheopis.

Aus dem Stämmen der Plathelminthen und Nematoden als Tierparasiten z.B. aus der Klasse der Helminthen z.B. Ancylostoma duodenale, Ancylostoma ceylanicum, Acylostoma braziliensis, Ancylostoma spp., Ascaris spp., Brugia malayi, Brugia timori, Bunostomum spp., Chabertia spp., Clonorchis spp., Cooperia spp., Dicrocoelium spp, Dictyocaulus filaria, Diphyllobothrium latum, Dracunculus medinensis, Echinococcus granulosus, Echinococcus multilocularis, Enterobius vermicularis, Faciola spp., Haemonchus spp., Heterakis spp., Hymenolepis nana, Hyostrongulus spp., Loa Loa, Nematodirus spp., Oesophagostomum spp., Opisthorchis spp., Onchocerca volvulus, Ostertagia spp., Paragonimus spp., Schistosomen spp, Strongyloides fuelleborni, Strongyloides stercoralis, Stronyloides spp., Taenia saginata, Taenia solium, Trichinella spiralis, Trichinella nativa, Trichinella britovi, Trichinella nelsoni, Trichinella pseudopsiralis, Trichostrongulus spp., Trichuris trichuria, Wuchereria bancrofti.

Aus dem Stamm der Nematoden als Pflanzenschädlinge z.B. Aphelenchoides spp., Bursaphelenchus spp., Ditylenchus spp., Globodera spp., Heterodera spp., Longidorus spp., Meloidogyne spp., Pratylenchus spp., Radopholus similis, Trichodorus spp., Tylenchulus semipenetrans, Xiphinema spp..

Aus dem Subphylum der Protozoa z.B. Eimeria.

Die erfindungsgemäßen Wirkstoffkombinationen können gegebenenfalls in bestimmten Konzentrationen bzw. Aufwandmengen auch als Herbizide, Safener, Wachstumsregulatoren oder Mittel zur Verbesserung der Pflanzeneigenschaften, oder als Mikrobizide, beispielsweise als Fungizide, Antimykotika, Bakterizide, Virizide (einschließlich Mittel gegen Viroide) oder als Mittel gegen MLO (Mycoplasma-like-organism) und RLO (Rickettsia-like-organism) verwendet werden.

Die vorliegende Erfindung betrifft weiterhin Formulierungen und daraus bereitete Anwendungsformen (Pflanzenschutzmittel oder Schädlingsbekämpfungsmittel), umfassend die erfindungsgemäße Wirkstoffkombination. Vorzugsweise handelt es sich um insektizide Formulierungen oder Anwendungsformen, welche Hilfsstoffe, wie beispielsweise Streckmittel, Lösemittel, Trägerstoffe und und/oder weitere Hilfsstoffe, wie beispielsweise oberflächenaktive Stoffe, enthalten.

Zur Herstellung der Formulierungen werden die Extrakte aus Samen des Neem-Baumes in handelüblicher Zubereitung oder in Form der isolierten Substanz eingesetzt.

Übliche Formulierungen sind beispielsweise Lösungen, Emulsionen, Spritzpulver, wasser- und ölbasierte Suspensionen, wasser- und ölbasierte Suspensionskonzentrate, Pulver, Stäubemittel, Pasten, lösliche Pulver, Schäume, Granulate, dispergierbare Granulate, lösliche Granulate, Streugranulate, Suspensions-Emulsions-Konzentrate, Wirkstoff-imprägnierte Naturstoffe, Wirkstoff-imprägnierte synthetische Stoffe, Düngemittel sowie Feinstverkapselungen in polymeren Stoffen.

Diese Formulierungen werden in bekannter Weise hergestellt, z.B. durch Vermischen der Wirkstoffe mit Hilfsstoffen wie beispielsweise Streckmitteln, Lösemitteln und/oder festen Trägerstoffen und/oder weiteren Hilfsstoffen wie beispielsweise oberflächenaktive Stoffe. Die Herstellung der Formulierungen erfolgt entweder in geeigneten Anlagen oder auch vor oder während der Anwendung.

Als Hilfsstoffe können solche Stoffe Verwendung finden, die geeignet sind, der Formulierung des Wirkstoffs oder den aus diesen Formulierungen bereiteten Anwendungsformen (wie z.B. gebrauchsfähigen Pflanzenschutzmitteln wie Spritzbrühen oder Saatgutbeizen) besondere Eigenschaften, wie bestimmte physikalische, technische und/oder biologische Eigenschaften, zu verleihen. Als typische Hilfsstoffe kommen in Frage: Streckmittel, Lösemittel und Trägerstoffe.

Als Streckmittel eignen sich z.B. Wasser, polare und unpolare organische chemische Flüssigkeiten z.B. aus den Klassen der aromatischen und nicht-aromatischen Kohlenwasserstoffe (wie Paraffine, Alkylbenzole, Alkylnaphthaline, Chlorbenzole), der Alkohole und Polyole (die ggf. auch substituiert, verethert und/oder verestert sein können), der Ketone (wie Aceton, Cyclohexanon), Ester (auch Fette und Öle) und (Poly-)Ether, der einfachen und substituierten Amine, Amide, Lactame (wie N-Alkylpyrrolidone) und Lactone, der Sulfone und Sulfoxide (wie Dimethylsulfoxid).

Im Falle der Benutzung von Wasser als Streckmittel können z.B. auch organische Lösemittel als Hilfslösemittel verwendet werden. Als flüssige Lösemittel kommen im Wesentlichen infrage: Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone, wie Aceton, Methylethylketon, Methylisobutylketon oder Cyclohexanon, stark polare Lösemittel wie Dimethylformamid und Dimethylsulfoxid, sowie Wasser.

Grundsätzlich können alle geeigneten Lösemittel verwendet werden. Geeignete Lösemittel sind beispielsweise aromatische Kohlenwasserstoffe, wie z.B. Xylol, Toluol oder Alkylnaphthaline, chlorierte aromatische oder aliphatische Kohlenwasserstoffe, wie z.B. Chlorbenzol, Chlorethylen, oder Methylenchlorid, aliphatische Kohlenwasserstoffe, wie z.B. Cyclohexan, Paraffine, Erdölfraktionen, mineralische und pflanzliche Öle, Alkohole, wie z.B. Methanol, Ethanol, isoPropanol, Butanol oder Glykol sowie deren Ether und Ester, Ketone wie z.B. Aceton, Methylethylketon, Methylisobutylketon oder Cyclohexanon, stark polare Lösemittel, wie Dimethylsulfoxid, sowie Wasser.

Grundsätzlich können alle geeigneten Trägerstoffe eingesetzt werden. Als Trägerstoffe kommen insbesondere infrage: z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und natürliche oder synthetische Silikate, Harze, Wachse und /oder feste Düngemittel. Mischungen solcher Trägerstoffe können ebenfalls verwendet werden. Als Trägerstoffe für Granulate kommen infrage: z.B. gebrochene und fraktionierte natürliche Gesteine wie Bentonit, Calcit, Marmor, Bims, Sepiolith, Dolomit, Kaolinit sowie synthetische Granulate aus anorganischen und organischen Mehlen sowie Granulate aus organischem Material wie Sägemehl, Papier, Kokosnussschalen, Maiskolben und Tabakstängel.

Auch verflüssigte gasförmige Streckmittel oder Lösemittel können eingesetzt werden. Insbesondere eignen sich solche Streckmittel oder Trägerstoffe, welche bei normaler Temperatur und unter Normaldruck gasförmig sind, z.B. Aerosol-Treibgase, wie Halogenkohlenwasserstoffe, sowie Butan, Propan, Stickstoff, Kohlendioxid und Pressluft.

Unter oberflächenaktiven Stoffen werden erfindungsgemäß Emulgier- und/oder Schaum erzeugende Mittel, Dispergiermittel oder Benetzungsmittel mit ionischen oder nicht-ionischen Eigenschaften oder Mischungen dieser oberflächenaktiven Stoffe verstanden. Beispiele hierfür sind Salze von Polyacrylsäure, Salze von Lignosulphonsäure, Salze von Phenolsulphonsäure oder Naphthalinsulphonsäure, Polykondensate von Ethylenoxid mit Fettalkoholen oder mit Fettsäuren oder mit Fettaminen, mit substituierten Phenolen (vorzugsweise Alkylphenole oder Arylphenole), Salze von Sulphobernsteinsäureestern, Taurinderivate (vorzugsweise Alkyltaurate), Phosphorsäureester von polyethoxylierten Alkoholen oder Phenole, Fettsäureester von Polyolen, und Derivate der Verbindungen enthaltend Sulphate, Sulphonate und Phosphate, z.B. Alkylarylpolyglycolether, Alkylsulfonate, Alkylsulfate, Arylsulfonate, Eiweißhydrolysate, Lignin-Sulfitablaugen und Methylcellulose. Die Anwesenheit einer oberflächenaktiven Substanz ist vorteilhaft, wenn einer der Wirkstoffe und/oder einer der inerten Trägerstoffe nicht in Wasser löslich ist und wenn die Anwendung in Wasser erfolgt.

Als weitere Hilfsstoffe können in den Formulierungen und den daraus abgeleiteten Anwendungsformen Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Nähr- und Spurennährstoffe, wie Salze von Eisen, Mangan, Bor, Kupfer, Kobalt, Molybdän und Zink vorhanden sein.

Weiterhin enthalten sein können Stabilisatoren wie Kältestabilisatoren, Konservierungsmittel, Oxidationsschutzmittel, Lichtschutzmittel oder andere die chemische und / oder physikalische Stabilität verbessernde Mittel. Weiterhin enthalten sein können schaumerzeugende Mittel oder Entschäumer.

Ferner können die Formulierungen und daraus abgeleiteten Anwendungsformen als zusätzliche Hilfsstoffe auch Haftmittel wie Carboxymethylcellulose, natürliche und synthetische pulverige, körnige oder latexförmige Polymere enthalten, wie Gummiarabikum, Polyvinylalkohol, Polyvinylacetat, sowie natürliche Phospholipide, wie Kephaline und Lecithine, und synthetische Phospholipide. Weitere Hilfsstoffe können mineralische und vegetabile Öle sein.

Gegebenenfalls können noch weitere Hilfsstoffe in den Formulierungen und den daraus abgeleiteten Anwendungsformen enthalten sein. Solche Zusatzstoffe sind beispielsweise Duftstoffe, schützende Kolloide, Bindemittel, Klebstoffe, Verdicker, thixotrope Stoffe, Penetrationsförderer, Retentionsförderer, Stabilisatoren, Sequestiermittel, Komplexbildner. Im Allgemeinen können die Wirkstoffe mit jedem festen oder flüssigen Zusatzstoff, welches für Formulierungszwecke gewöhnlich verwendet wird, kombiniert werden.

Die Formulierungen enthalten bevorzugt zwischen 0,00000001 und 98 Gew.-% Wirkstoff oder, besonders bevorzugt zwischen 0,01 und 95 Gew.-% Wirkstoff, besonders bevorzugt zwischen 0,5 und 90 Gew.-% Wirkstoff, bezogen auf das Gewicht der Formulierung. In vorgenannten Zusammenhang schliesst der Begriff "Wirkstoff" auch Wirkstoffkombinationen mit ein.

Die erfindungsgemäße Wirkstoffkombination kann in ihren handelsüblichen Formulierungen sowie in den aus diesen Formulierungen bereiteten Anwendungsformen in Mischung mit anderen Wirkstoffen wie Insektiziden, Lockstoffen, Sterilantien, Bakteriziden, Akariziden, Nematiziden, Fungiziden, wachstumsregulierenden Stoffen, Herbiziden, Safenern, Düngemitteln, Semiochemicals oder auch mit Mitteln zur Verbesserung der Pflanzeneigenschaften vorliegen.

Die erfindungsgemäße Wirkstoffkombination kann ferner beim Einsatz als Insektizide in ihren Formulierungen sowie in den aus diesen Formulierungen bereiteten Anwendungsformen in Mischung mit Synergisten vorliegen. Synergisten sind Verbindungen, durch die die Wirkung der Wirkstoffe gesteigert wird, ohne daß der zugesetzte Synergist selbst aktiv wirksam sein muß.

Die erfindungsgemäße Wirkstoffkombination kann ferner beim Einsatz als Insektizid in ihren handelsüblichen Formulierungen sowie in den aus diesen Formulierungen bereiteten Anwendungsformen in Mischungen mit Hemmstoffen vorliegen, die einen Abbau des Wirkstoffes nach Anwendung in der Umgebung der Pflanze, auf der Oberfläche von Pflanzenteilen oder in pflanzlichen Geweben vermindern.

Der Wirkstoffgehalt der aus den Formulierungen bereiteten Anwendungsformen (Pflanzenschutzmittel) kann in weiten Bereichen variieren. Die Wirkstoffkonzentration der Anwendungsformen kann üblicherweise zwischen 0,00000001 und 95 Gew.-% Wirkstoff, vorzugsweise zwischen 0,00001 und 1 Gew.-%, bezogen auf das Gewicht der Anwendungsform, liegen.

Die Anwendung geschieht in einer den Anwendungsformen angepaßten üblichen Weise.

Erfindungsgemäß können alle Pflanzen und Pflanzenteile mit und ohne Befall (preventiv und kurativ, Kontakt- oder Frassmittel) behandelt werden. Ebenfalls möglich ist eine Behandlung des die Pflanze umgebenen Lebensraum, bevorzugt das Erdreich. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Sproß, Blatt, Blüte und Wurzel verstanden werden, wobei beispielhaft Blätter, Nadeln, Stengel, Stämme, Blüten, Fruchtkörper, Früchte und Saatgut sowie Wurzeln, Knollen und Rhizome aufgeführt werden. Zu den Pflanzenteilen gehört auch Erntegut sowie vegetatives und generatives Vermehrungsmaterial, beispielsweise Früchte, Samen, Stecklinge, Knollen, Rhizome, Ableger, Saatgut, Brutzwiebeln, Absenker und Ausläufer.

Die erfindungsgemäße Behandlung der Pflanzen und Pflanzenteile mit den Wirkstoffkombinationen erfolgt direkt oder durch Einwirkung auf deren Umgebung, Lebensraum oder Lagerraum nach den üblichen Behandlungsmethoden, z.B. durch Tauchen, Sprühen, Angiessen, Einmischen, Verdampfen, Vernebeln, Streuen, Aufstreichen, Injizieren und bei Vermehrungsmaterial, insbesondere bei Saatgut, weiterhin durch ein- oder mehrschichtiges Umhüllen.

Pflanzen, welche erfindungsgemäß behandelt werden können, sind insbesondere ausgewählt unter den nachfolgend genannten.

Einjährige Kulturen wie beispielsweise: Gemüse wie Fruchtgemüse und Blütenstände (z.B. Paprika, Peperoni, Tomaten, Auberginen, Gurken, Kürbisse, Zucchini, Ackerbohnen, Stangenbohnen, Buschbohnen, Erbsen, Artischokken), Blattgemüse (z.B. Kopfsalat, Chicoreé, Endivien, Kressen, Rauken, Feldsalat, Eisbergsalat, Lauch, Spinat, Mangold), Knollen-, Wurzel-und Stängelgemüse (z.B. Sellerie, Rote Beete, Möhren, Radieschen, Meerrettich, Schwarzwurzeln, Spargel, Speiserüben, Palmsprossen, Bambussprossen, außerdem Zwiebelgemüse, beispielsweise Zwiebeln, Lauch, Fenchel, Knoblauch), Kohlgemüse (z.B. Blumenkohl, Broccoli, Kohlrabi, Rotkohl, Weißkohl, Grünkohl, Wirsing, Rosenkohl, Chinakohl), Zierpflanzen, wie Schnittblumen (z.B. Rosen, Nelken, Gerbera, Lilien, Margeriten, Chrysanthemen, Tulpen, Narzissen, Anemonen, Mohn, Amaryllis, Dahlien, Azaleen, Malven, Sonnenblumen), Beetpflanzen, Topfpflanzen und Stauden (z.B. Tagetes, Stiefmütterchen, Fleißige Lieschen, Begonien), Melonen und Mais.

Mehrjährige Kulturen wie beispielsweise Zitrus (z.B. Orangen, Grapefruits, Mandarinen, Zitronen, Limetten, Bitterorangen, Kumquats, Satsumas), Kernobst (z.B. Äpfel, Birnen und Quitten), Steinobst (z.B. Pfirsiche, Nektarinen, Kirschen, Pflaumen, Zwetschgen, Aprikosen), Wein, Hopfen, Oliven, Tee und tropische Kulturen, wie beispielsweise Mangos, Papayas, Feigen, Ananas, Datteln, Bananen, Durians (Stinkfrüchte), Kakis, Kokosnüsse, Kakao, Kaffee, Avocados, Litschis, Maracujas, Guaven, Mandeln und Nüsse wie beispielsweise Haselnüsse, Walnüsse, Pistazien, Cashewnüsse, Paranüsse, Pekannüsse, Butternüsse, Kastanien, Hickorynüsse, Macadamianüsse, Erdnüsse, Beerenfrüchte (z.B. Johannisbeeren, Stachelbeeren, Himbeeren, Brombeeren, Heidelbeeren, Erdbeeren, Preiselbeeren, Kiwis, Cranberries), Zierpflanzen, wie Schnittblumen (z.B. Rosen, Nelken, Gerbera, Lilien, Margeriten, Chrysanthemen, Tulpen, Narzissen, Anemonen, Mohn, Amaryllis, Dahlien, Azaleen, Malven), Beetpflanzen, Topfpflanzen und Stauden (z.B. Rosen, Tagetes, Stiefmütterchen, Geranien, Fuchsien, Hibiscus, Chrysanthemen, Fleißige Lieschen, Alpenveilchen, Usambaraveilchen, Sonnenblumen, Begonien), Sträucher und Koniferen (z.B. Ficus, Rhododendron, Fichten, Tannen, Kiefern, Eiben, Wacholder, Pinien, Oleander), Gewürze (z.B. Anis, Chilli, Paprika, Pfeffer, Vanille, Majoran, Thymian, Gewürznelken, Wacholderbeeren, Zimt, Estragon, Koriander, Safran, Ingwer).

Erfindungsgemäß bevorzugt werden Zierpflanzen wie z.B. Rosen, Geranien, Fuchsien, Margariten, Beetpflanzen, Topfpflanzen, Heil- und Gewürzpflanzen wie z.B. Salbei, Petersilie, Basilikum, Sonnenhut, Goldregen, Pharmaweide, Bittersüßer Nachtschatten und Stauden, wie z.B. Phlox, Eisenhut, Anemonen, Gemüse, einschliesslich Fruchtgemüse, Knollen-, Wurzel- und Stängelgemüse, Blatt- und Sprossgemüse, Kohlgemüse sowie Hülsenfrüchte und mehrjährige Kulturen wie Zitrus, Kernobst wie Apfel oder Birne, Steinobst wie Kirsche, Weinreben, Hopfen, Oliven, Tee und tropische Kulturen, Artischocke, Tabak, Pfefferminze, Kalanchoe und Drachenkopf. Besonders bevorzugt sind Zierpflanzen in Haus- und Garten, Gemüse sowie Kern,-und Steinobst.

Die erfindungsgemäßen Wirkstoffkombinationen eignen sich ebenfalls zur Behandlung von Saatgut. Bevorzugt sind dabei die vorstehend als bevorzugt oder besonders bevorzugt genannten erfindungsgemäßen Kombinationen zu nennen. So entsteht ein großer Teil des durch Schädlinge verursachten Schadens an Kulturpflanzen bereits durch den Befall des Saatguts während der Lagerung und nach dem Einbringen des Saatguts in den Boden sowie während und unmittelbar nach der Keimung der Pflanzen. Diese Phase ist besonders kritisch, da die Wurzeln und Sprosse der wachsenden Pflanze besonders empfindlich sind und bereits ein geringer Schaden zum Absterben der ganzen Pflanze führen kann. Es besteht daher ein insbesondere großes Interesse daran, das Saatgut und die keimende Pflanze durch den Einsatz geeigneter Mittel zu schützen.

Die Bekämpfung von Schädlingen durch die Behandlung des Saatguts von Pflanzen ist seit langem bekannt und ist Gegenstand ständiger Verbesserungen. Dennoch ergeben sich bei der Behandlung von Saatgut eine Reihe von Problemen, die nicht immer zufrieden stellend gelöst werden können. So ist es erstrebenswert, Verfahren zum Schutz des Saatguts und der keimenden Pflanze zu entwickeln, die das zusätzliche Ausbringen von Pflanzenschutzmitteln nach der Saat oder nach dem Auflaufen der Pflanzen überflüssig machen. Es ist weiterhin erstrebenswert, die Menge des eingesetzten Wirkstoffs dahingehend zu optimieren, dass das Saatgut und die keimende Pflanze vor dem Befall durch Schädlinge bestmöglich geschützt werden, ohne jedoch die Pflanze selbst durch den eingesetzten Wirkstoff zu schädigen. Insbesondere sollten Verfahren zur Behandlung von Saatgut auch die intrinsischen insektiziden Eigenschaften transgener Pflanzen einbeziehen, um einen optimalen Schutz des Saatguts und auch der keimenden Pflanze bei einem minimalen Aufwand an Pflanzenschutzmitteln zu erreichen.

Die vorliegende Erfindung bezieht sich daher insbesondere auch auf ein Verfahren zum Schutz von Saatgut und keimenden Pflanzen vor dem Befall von Schädlingen, indem das Saatgut mit einer erfindungsgemäßen Wirkstoffkombination behandelt wird. Das erfindungsgemäße Verfahren zum Schutz von Saatgut und keimenden Pflanzen vor dem Befall von Schädlingen umfasst ein Verfahren, in dem das Saatgut zur gleichen Zeit mit einem Wirkstoff der Formel (I-1), (1-2) oder (1-3) und Azadirachtin behandelt wird. Es umfasst auch ein Verfahren, in dem das Saatgut zu unterschiedlichen Zeiten mit einem Wirkstoff der Formel (1-1), (1-2) oder (1-3) und Azadirachtin behandelt wird. Die Erfindung bezieht sich ebenfalls auf die Verwendung der erfindungsgemäßen Wirkstoffkombinationen zur Behandlung von Saatgut zum Schutz des Saatguts und der daraus entstehenden Pflanze vor Schädlingen. Weiterhin bezieht sich die Erfindung auf Saatgut, welches zum Schutz vor Schädlingen mit einer erfindungsgemäßen Wirkstoffkombination behandelt wurde. Die Erfindung bezieht sich auch auf Saatgut, welches zur gleichen Zeit mit einem Wirkstoff der Formel (1-1), (1-2) oder (1-3) und Azadirachtin behandelt wurde. Die Erfindung bezieht sich weiterhin auf Saatgut, welches zu unterschiedlichen Zeiten mit einem Wirkstoff der Formel (I-1), (1-2) oder (1-3) und Azadirachtin behandelt wurde. Bei Saatgut, welches zu unterschiedlichen Zeiten mit einem Wirkstoff der Formel (1-1), (1-2) oder (1-3) und Azadirachtin behandelt wurde, können die einzelnen Wirkstoffe des erfindungsgemäßen Mittels in unterschiedlichen Schichten auf dem Saatgut enthalten sein. Dabei können die Schichten, die einen Wirkstoff der Formel (I-1), (1-2) oder (1-3) und Azadirachtin enthalten, gegebenenfalls durch eine Zwischenschicht getrennt sein. Die Erfindung bezieht sich auch auf Saatgut, bei dem ein Wirkstoff der Formel (I-1), (1-2) oder (1-3) und Azadirachtin als Bestandteil einer Umhüllung oder als weitere Schicht oder weitere Schichten zusätzlich zu einer Umhüllung aufgebracht sind.

Einer der Vorteile der vorliegenden Erfindung ist es, dass aufgrund der besonderen systemischen Eigenschaften einiger der erfindungsgemäßen Wirkstoffkombinationen die Behandlung des Saatguts mit diesen Wirkstoffkombinationen nicht nur das Saatgut selbst, sondern auch die daraus hervorgehenden Pflanzen nach dem Auflaufen vor Schädlingen schützt. Auf diese Weise kann die unmittelbare Behandlung der Kultur zum Zeitpunkt der Aussaat oder kurz danach entfallen.

Ein weiterer Vorteil besteht in der synergistischen Erhöhung der insektiziden Wirksamkeit der erfindungsgemäßen Wirkstoffkombinationen gegenüber dem insektiziden Einzelwirkstoff, die über die zu erwartende Wirksamkeit

der beiden einzeln angewendeten Wirkstoffe hinausgeht. Vorteilhaft ist auch die synergistische Erhöhung der fungiziden Wirksamkeit der erfindungsgemäßen Wirkstoffkombinationen gegenüber dem fungiziden Einzelwirkstoff, die über die zu erwartende Wirksamkeit des einzeln angewendeten Wirkstoffs hinausgeht. Damit wird eine Optimierung der Menge der eingesetzten Wirkstoffe ermöglicht.

Ebenso ist es als vorteilhaft anzusehen, dass die erfindungsgemäßen Wirkstoffkombinationen insbesondere auch bei transgenem Saatgut eingesetzt werden können, wobei die aus diesem Saatgut hervorgehenden Pflanzen zur Expression eines gegen Schädlinge gerichteten Proteins befähigt sind. Durch die Behandlung solchen Saatguts mit den erfindungsgemäßen Wirkstoffkombinationen können bestimmte Schädlinge bereits durch die Expression des z.B. insektiziden Proteins kontrolliert werden, und zusätzlich durch die erfindungsgemäßen Wirkstoffkombinationen vor Schäden bewahrt werden.

Die erfindungsgemäßen Wirkstoffkombinationen eignen sich zum Schutz von Saatgut jeglicher Pflanzensorte wie bereits vorstehend genannt, die in der Landwirtschaft, im Gewächshaus, in Forsten oder im Gartenbau eingesetzt wird. Insbesondere handelt es sich dabei um Saatgut von Mais, Erdnuss, Canola, Raps, Mohn, Soja, Baumwolle, Rübe (z.B. Zuckerrübe und Futterrübe), Reis, Hirse, Weizen, Gerste, Hafer, Roggen, Sonnenblume, Tabak, Kartoffeln oder Gemüse (z.B. Tomaten, Kohlgewächs). Die erfindungsgemäßen Wirkstoffkombinationen eignen sich ebenfalls zur Behandlung des Saatguts von Obstpflanzen und Gemüse wie vorstehend bereits genannt. Besondere Bedeutung kommt der Behandlung des Saatguts von Mais, Soja, Baumwolle, Weizen und Canola oder Raps zu.

Wie vorstehend bereits erwähnt, kommt auch der Behandlung von transgenem Saatgut mit einer erfindungsgemäßen Wirkstoffkombination eine besondere Bedeutung zu. Dabei handelt es sich um das Saatgut von Pflanzen, die in der Regel zumindest ein heterologes Gen enthalten, das die Expression eines Polypeptids mit insbesondere insektiziden Eigenschaften steuert. Die heterologen Gene in transgenem Saatgut können dabei aus Mikroorganismen wie Bacillus, Rhizobium, Pseudomonas, Serratia, Trichoderma, Clavibacter, Glomus oder Gliocladium stammen. Die vorliegende Erfindung eignet sich besonders für die Behandlung von transgenem Saatgut, das zumindest ein heterologes Gen enthält, das aus Bacillus sp. stammt und dessen Genprodukt Wirksamkeit gegen Maiszünsler und/oder Maiswurzel-Bohrer zeigt. Besonders bevorzugt handelt es sich dabei um ein heterologes Gen, das aus Bacillus thuringiensis stammt.

Im Rahmen der vorliegenden Erfindung wird die erfindungsgemäße Wirkstoffkombination alleine oder in einer geeigneten Formulierung auf das Saatgut aufgebracht. Vorzugsweise wird das Saatgut in einem Zustand behandelt, in dem es so stabil ist, dass keine Schäden bei der Behandlung auftreten. Im Allgemeinen kann die Behandlung des Saatguts zu jedem Zeitpunkt zwischen der Ernte und der Aussaat erfolgen. Üblicherweise wird Saatgut verwendet, das von der Pflanze getrennt und von Kolben, Schalen, Stängeln, Hülle, Wolle oder Fruchtfleisch befreit wurde.

Im Allgemeinen muss bei der Behandlung des Saatguts darauf geachtet werden, dass die Menge der auf das Saatgut aufgebrachten erfindungsgemäßen Wirkstoffkombination und/oder weiterer Zusatzstoffe so gewählt wird, dass die Keimung des Saatguts nicht beeinträchtigt bzw. die daraus hervorgehende Pflanze nicht geschädigt wird. Dies ist vor allem bei Wirkstoffen zu beachten, die in bestimmten Aufwandmengen phytotoxische Effekte zeigen können.

Die erfindungsgemäßen Mittel können unmittelbar aufgebracht werden, also ohne weitere Komponenten zu enthalten und ohne verdünnt worden zu sein. In der Regel ist es vorzuziehen, die Mittel in Form einer geeigneten Formulierung auf das Saatgut aufzubringen. Geeignete Formulierungen und Verfahren für die Saatgutbehandlung sind dem Fachmann bekannt und werden z.B. in den folgenden Dokumenten beschrieben: US 4,272,417 A, US 4,245,432 A, US 4,808,430 A, US 5,876,739 A, US 2003/0176428 A1, WO 2002/080675 A1, WO 2002/028186 A2.

Die erfindungsgemäß verwendbaren Wirkstoffe können in die üblichen Beizmittel-Formulierungen überführt werden, wie Lösungen, Emulsionen, Suspensionen, Pulver, Schäume, Slurries oder andere Hüllmassen für Saatgut, sowie ULV-Formulierungen.

Diese Formulierungen werden in bekannter Weise hergestellt, indem man die Wirkstoffe mit üblichen Zusatzstoffen vermischt, wie zum Beispiel übliche Streckmittel sowie Lösungs- oder Verdünnungsmittel, Farbstoffe, Netzmittel, Dispergiermittel, Emulgatoren, Entschäumer, Konservierungsmittel, sekundäre Verdickungsmittel, Kleber, Gibberelline und auch Wasser.

Als Farbstoffe, die in den erfindungsgemäß verwendbaren Beizmittel-Formulierungen enthalten sein können, kommen alle für derartige Zwecke üblichen Farbstoffe in Betracht. Dabei sind sowohl in Wasser wenig lösliche Pigmente als auch in Wasser lösliche Farbstoffe verwendbar. Als Beispiele genannt seien die unter den Bezeichnungen Rhodamin B, C.I. Pigment Red 112 und C.I. Solvent Red 1 bekannten Farbstoffe.

Als Netzmittel, die in den erfindungsgemäß verwendbaren Beizmittel-Formulierungen enthalten sein können, kommen alle zur Formulierung von agrochemischen Wirkstoffen üblichen, die Benetzung fördernden Stoffe in Frage. Vorzugsweise verwendbar sind Alkylnaphthalin-Sulfonate, wie Diisopropyl- oder Diisobutylnaphthalin-Sulfonate.

Als Dispergiermittel und/oder Emulgatoren, die in den erfindungsgemäß verwendbaren Beizmittel-Formulierungen enthalten sein können, kommen alle zur Formulierung von agrochemischen Wirkstoffen üblichen nichtionischen, anionischen und kationischen Dispergiermittel in Betracht. Vorzugsweise verwendbar sind nichtionische oder anionische Dispergiermittel oder Gemische von nichtionischen oder anionischen Dispergiermitteln. Als geeignete nichtionische Dispergiermittel sind insbesondere Ethylenoxid-Propylenoxid Blockpolymere, Alkylphenolpolyglykolether sowie Tristryrylphenolpolyglykolether und deren phosphatierte oder sulfatierte Derivate zu nennen. Geeignete anionische Dispergiermittel sind insbesondere Ligninsulfonate, Polyacrylsäuresalze und Arylsulfonat-Formaldehydkondensate.

Als Entschäumer können in den erfindungsgemäß verwendbaren Beizmittel-Formulierungen alle zur Formulierung von agrochemischen Wirkstoffen üblichen schaumhemmenden Stoffe enthalten sein. Vorzugsweise verwendbar sind Silikonentschäumer und Magnesiumstearat.

Als Konservierungsmittel können in den erfindungsgemäß verwendbaren Beizmittel-Formulierungen alle für derartige Zwecke in agrochemischen Mitteln einsetzbaren Stoffe vorhanden sein. Beispielhaft genannt seien Dichlorophen und Benzylalkoholhemiformal.

Als sekundäre Verdickungsmittel, die in den erfindungsgemäß verwendbaren Beizmittel-Formulierungen enthalten sein können, kommen alle für derartige Zwecke in agrochemischen Mitteln einsetzbaren Stoffe in Frage. Vorzugsweise in Betracht kommen Cellulosederivate, Acrylsäurederivate, Xanthan, modifizierte Tone und hochdisperse Kieselsäure.

Als Kleber, die in den erfindungsgemäß verwendbaren Beizmittel-Formulierungen enthalten sein können, kommen alle üblichen in Beizmitteln einsetzbaren Bindemittel in Frage. Vorzugsweise genannt seien Polyvinylpyrrolidon, Polyvinylacetat, Polyvinylalkohol und Tylose.

Als Gibberelline, die in den erfindungsgemäß verwendbaren Beizmittel-Formulierungen enthalten sein können, kommen vorzugsweise die Gibberelline A1, A3 (= Gibberellinsäure), A4 und A7 infrage, besonders bevorzugt verwendet man die Gibberellinsäure. Die Gibberelline sind bekannt (vgl. R. Wegler "Chemie der Pflanzenschutz- und Schädlingsbekämpfungsmittel", Bd. 2, Springer Verlag, 1970, S. 401-412).

Die erfindungsgemäß verwendbaren Beizmittel-Formulierungen können entweder direkt oder nach vorherigem Verdünnen mit Wasser zur Behandlung von Saatgut der verschiedensten Art, auch von Saatgut transgener Pflanzen, eingesetzt werden. Dabei können im Zusammenwirken mit den durch Expression gebildeten Substanzen auch zusätzliche synergistische Effekte auftreten.

Zur Behandlung von Saatgut mit den erfindungsgemäß verwendbaren Beizmittel-Formulierungen oder den daraus durch Zugabe von Wasser hergestellten Zubereitungen kommen alle üblicherweise für die Beizung einsetzbaren Mischgeräte in Betracht. Im einzelnen geht man bei der Beizung so vor, dass man das Saatgut in einen Mischer gibt, die jeweils gewünschte Menge an Beizmittel-Formulierungen entweder als solche oder nach vorherigem Verdünnen mit Wasser hinzufügt und bis zur gleichmäßigen Verteilung der Formulierung auf dem Saatgut mischt. Gegebenenfalls schließt sich ein Trocknungsvorgang an.

Wie bereits oben erwähnt, können erfindungsgemäß alle Pflanzen und deren Teile behandelt werden. In einer bevorzugten Ausführungsform werden wild vorkommende oder durch konventionelle biologische Zuchtmethoden, wie Kreuzung oder Protoplastenfusion erhaltenen Pflanzenarten und Pflanzensorten sowie deren Teile behandelt. In einer weiteren bevorzugten Ausführungsform werden transgene Pflanzen und Pflanzensorten, die durch gentechnologische Methoden, wie beispielsweise Antisense- oder Cosuppressions-Technologie, RNA-Interferenz - RNAi - Technologie, gegebenenfalls in Kombination mit konventionellen Methoden erhalten wurden (Genetically Modified Organisms) und deren Teile behandelt. Die Begriffe "Teile" bzw. "Teile von Pflanzen" oder "Pflanzenteile" wurden oben erläutert.

Besonders bevorzugt werden erfindungsgemäß Pflanzen der jeweils handelsüblichen oder in Gebrauch befindlichen Pflanzensorten behandelt. Unter Pflanzensorten versteht man Pflanzen mit neuen Eigenschaften ("Traits"), die sowohl durch konventionelle Züchtung, durch Mutagenese oder durch rekombinante DNA-Techniken erzeugt wurden. Dies können Sorten, Bio- und Genotypen sein.

Je nach Pflanzenarten bzw. Pflanzensorten, deren Standort und Wachstumsbedingungen (Böden, Klima, Vegetationsperiode, Ernährung) können durch die erfindungsgemäße Behandlung auch überadditive ("synergistische") Effekte auftreten. So sind beispielsweise erniedrigte Aufwandmengen und/oder Erweiterungen des Wirkungsspektrums und/oder eine Verstärkung der Wirkung der erfindungsgemäß verwendbaren Stoffe und Mittel, besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte möglich, die über die eigentlich zu erwartenden Effekte hinausgehen.

Zu den bevorzugten erfindungsgemäß zu behandelnden transgenen (gentechnologisch erhaltenen) Pflanzen bzw. Pflanzensorten gehören alle Pflanzen, die durch die gentechnologische Modifikation genetisches Material erhielten, welches diesen Pflanzen besondere vorteilhafte wertvolle Eigenschaften ("Traits") verleiht. Beispiele für solche Eigenschaften sind besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte. Weitere und besonders hervorgehobene Beispiele für solche Eigenschaften sind eine erhöhte Abwehr der Pflanzen gegen tierische und mikrobielle Schädlinge, wie gegenüber Insekten, Milben, pflanzenpathogenen Pilzen, Bakterien und/oder Viren sowie eine erhöhte Toleranz der Pflanzen gegen bestimmte herbizide Wirkstoffe. Als Beispiele transgener Pflanzen werden die wichtigen Kulturpflanzen, wie

Getreide (Weizen, Reis), Mais, Soja, Kartoffel, Zuckerrüben, Tomaten, Erbsen und andere Gemüsesorten, Baumwolle, Tabak, Raps, sowie Obstpflanzen (mit den Früchten Äpfel, Birnen, Zitrusfrüchten und Weintrauben) erwähnt, wobei Mais, Soja, Kartoffel, Baumwolle, Tabak und Raps besonders hervorgehoben werden. Als Eigenschaften ("Traits") werden besonders hervorgehoben die erhöhte Abwehr der Pflanzen gegen Insekten, Spinnentiere, Nematoden und Schnecken durch in den Pflanzen entstehende Toxine, insbesondere solche, die durch das genetische Material aus Bacillus Thuringiensis (z.B. durch die Gene CryIA(a), CryIA(b), CryIA(c), CryIIA, CryIIIA, CryIIIB2, Cry9c Cry2Ab, Cry3Bb und CrylF sowie deren Kombinationen) in den Pflanzen erzeugt werden (im folgenden "Bt Pflanzen"). Als Eigenschaften ("Traits") werden auch besonders hervorgehoben die erhöhte Abwehr von Pflanzen gegen Pilze, Bakterien und Viren durch Systemische Akquirierte Resistenz (SAR), Systemin, Phytoalexine, Elicitoren sowie Resistenzgene und entsprechend exprimierte Proteine und Toxine. Als Eigenschaften ("Traits") werden weiterhin besonders hervorgehoben die erhöhte Toleranz der Pflanzen gegenüber bestimmten herbiziden Wirkstoffen, beispielsweise Imidazolinonen, Sulfonylharnstoffen, Glyphosat e oder Phosphinotricin (z.B. "PAT"-Gen). Die jeweils die gewünschten Eigenschaften ("Traits") verleihenden Gene können auch in Kombinationen miteinander in den transgenen Pflanzen vorkommen. Als Beispiele für "Bt Pflanzen" seien Maissorten, Baumwollsorten, Sojasorten und Kartoffelsorten genannt, die unter den Handelsbezeichnungen YIELD GARD® (z.B. Mais, Baumwolle, Soja), KnockOut® (z.B. Mais), StarLink® (z.B. Mais), Bollgard® (Baumwolle), Nucotn® (Baumwolle) und NewLeaf® (Kartoffel) vertrieben werden. Als Beispiele für Herbizid-tolerante Pflanzen seien Maissorten, Baumwollsorten und Sojasorten genannt, die unter den Handelsbezeichnungen Roundup Ready® (Toleranz gegen Glyphosate z.B. Mais, Baumwolle, Soja), Liberty Link® (Toleranz gegen Phosphinotricin, z.B. Raps), IMI® (Toleranz gegen Imidazolinone) und STS® (Toleranz gegen Sulfonylharnstoffe z.B. Mais) vertrieben werden. Als Herbizid- resistente (konventionell auf Herbizid-Toleranz gezüchtete) Pflanzen seien auch die unter der Bezeichnung Clearfield® vertriebenen Sorten (z.B. Mais) erwähnt. Selbstverständlich gelten diese Aussagen auch für in der Zukunft entwickelte bzw. zukünftig auf den Markt kommende Pflanzensorten mit diesen oder zukünftig entwickelten genetischen Eigenschaften ("Traits").

Die erfindungsgemäßen Wirkstoffkombinationen können auch zur Behandlung von in beliebigen Rasenarten ("turfgrasses") lebenden Insekten eingesetzt werden. Als zu bekämpfende Insekten seien beispielsweise genannt: Lepidopteren wie Grasschollwürmer *(Crambus sperryellus* oder *bonifatellus)* oder z.B. *Pseudaletia unipuncta, Feltia subterrane, Peridroma saucia, Agrotis ipsilon, Hylephi phylaeus, Nomophila noctuella,* Käfer (Coleoptera) (z.B. *Listroderes costirostris obliquus* oder Flohkäfer *Chaetocnema repens)* wie auch Adulte und Larven der Skarabaeidae *(Phyllopertha horticola,* Gartenlaubkäfer, *Amphimallon solstitiale,* Junikäfer, *Melolantha melolantha,* Maikäfer, *Popillia japonica,* Japankäfer, *Cyclocephala spp.,* masked chafer, Mollusken (Nackt- und Gehäuseschnecken), Zikaden wie *Draeculacephala minerva* oder *Deltacephalus sonorus,* Blattwanzen *(Blissus insularis Barber) und Weichwanzen* (Familie Miridae z.B. *Spanogonicus albofasciatus,* Dipteren (z.B. *Oscinella frit),* Schildläuse (z.B. *Odonaspis ruthae, Antoninia graminis),* Spinnmilben wie *Bryobia praetiosa* (The clover mite) oder *Aceria neocynodonis* (Bermudagrass mite) und Rüsselkäfer wie *Spenophorus phoeniciensis Chitt.* oder S. *venatus vestitus.*

Beispiele fuer Rasenarten fuer die kalte Jahreszeit sind Blaugraeser ("blue grasses"; *Poa spp.),* wie "Kentucky bluegrass" *(Poa pratensis L.),* "rough bluegrass" *(Poa trivialis L.),* "Canada bluegrass" *(Poa compressa L.),* "annual bluegrass" *(Poa annua L.),* "upland bluegrass" *(Poa glaucantha Gaudin),* "wood bluegrass" *(Poa nemoralis L.)* und "bulbous bluegrass" *(Poa bulbosa L.);* Straussgraeser ("Bentgrass", *Agrostis spp.),* wie "creeping bentgrass" *(Agrostis palustris Huds.),* "colonial bentgrass" *(Agrostis tenuis Sibth.),* "velvet bentgrass" *(Agrostis canina L.),* "South German Mixed Bentgrass" *(Agrostis spp.* einschliesslich *Agrostis tenius Sibth., Agrostis canina L.,* und *Agrostis palustris Huds.),* und "redtop" *(Agrostis alba L.);*

Schwingel ("Fescues", *Festucu spp.),* wie "red fescue" *(Festuca rubra L. spp. rubra),* "creeping fescue" *(Festuca rubra L.),* "chewings fescue" *(Festuca rubra commutata Gaud.),* "sheep fescue" *(Festuca ovina L.),* "hard fescue" *(Festuca longifolia Thuill.),* "hair fescue" *(Festucu capillata Lam.),* "tall fescue" *(Festuca arundinacea Schreb.)* und "meadow fescue" *(Festuca elanor L.);*

Lolch ("ryegrasses", *Lolium spp.),* wie "annual ryegrass" *(Lolium multiflorum Lam.),* "perennial ryegrass" *(Lolium perenne L.)* und "italian ryegrass" *(Lolium multiflorum Lam.);*

und Weizengraeser ("wheatgrasses", *Agropyron spp..),* wie "fairway wheatgrass" *(Agropyron cristatum (L.)* Gaertn.), "crested wheatgrass" *(Agropyron desertorum* (Fisch.) Schult.) und "western wheatgrass" *(Agropyron smithii Rydb.).*

Beispiele fuer weitere "cool season turfgrasses" sind "beachgrass" *(Ammophila breviligulata Fern.),* "smooth bromegrass" *(Bromus inermis Leyss.),* Schilf ("cattails") wie "Timothy" *(Phleum pratense L.),* "sand cattail" *(Phleum subulatum L.),* "orchardgrass" *(Dactylis glomerata L.),* "weeping alkaligrass" *(Puccinellia distans (L.) Parl.)* und "crested dog's-tail" *(Cynosurus cristatus L.).*

Beispiele fuer "warm season turfgrasses" sind "Bermudagrass" *(Cynodon spp.* L. C. Rich), "zoysiagrass" *(Zoysia spp.* Willd.), "St. Augustine grass" *(Stenotaphrum secundatum* Walt Kuntze), "centipedegrass" *(Eremochloa ophiuroides* Munro Hack.), "carpetgrass" *(Axonopus affinis* Chase), "Bahia grass" *(Paspalum notatum* Flugge), "Kikuyugrass" *(Pennisetum clandestinum* Hochst. ex Chiov.), "buffalo grass" *(Buchloe dactyloids* (Nutt.) Engelm.), "Blue gramma" *(Bouteloua gracilis* (H.B.K.) Lag. ex Griffiths), "seashore paspalum" *(Paspalum vaginatum* Swartz) und "sideoats grama"

*(Bouteloua curtipendula* (Michx. Torr.). "Cool season turfgrasses" sind im Allgemeinen bevorzugt. Besonders bevorzugt sind Blaugras, Straussgras und "redtop", Schwingel und Lolch. Straussgras ist insbesondere bevorzugt.

Die Anwendung im Bereich der Haushaltsinsektizide erfolgt allein oder in Kombination mit anderen geeigneten Wirkstoffen wie Phosphorsäureestern, Carbamaten, Pyrethroiden, Neonicotinoiden, Wachstumsregulatoren oder Wirkstoffen aus anderen bekannten Insektizidklassen.

Die Anwendung erfolgt in Aerosolen, drucklosen Sprühmitteln, z.B. Pump- und Zerstäubersprays, Nebelautomaten, Foggern, Schäumen, Gelen, Verdampferprodukten mit Verdampferplättchen aus Cellulose oder Kunststoff, Flüssigverdampfern, Gel- und Membranverdampfern, propellergetriebenen Verdampfern, energielosen bzw. passiven Verdampfungssystemen, Mottenpapieren, Mottensäckchen und Mottengelen, als Granulate oder Stäube, in Streuködern oder Köderstationen.

Die gute insektizide und akarizide Wirkung der erfindungsgemäßen Wirkstoffkombinationen geht aus den nachfolgenden Beispielen hervor. Während die einzelnen Wirkstoffe in der Wirkung Schwächen aufweisen, zeigen die Kombinationen eine Wirkung, die über eine einfache Wirkungssummierung hinausgeht.

Ein synergistischer Effekt liegt bei Insektiziden und Akariziden immer dann vor, wenn die Wirkung der Wirkstoffkombinationen größer ist als die Summe der Wirkungen der einzeln applizierten Wirkstoffe.

Die zu erwartende Wirkung für eine gegebene Kombination zweier Wirkstoffe kann nach S.R. Colby, Weeds 15 (1967), 20-22 wie folgt berechnet werden:

Wenn

X den Abtötungsgrad, ausgedrückt in % der unbehandelten Kontrolle, beim Einsatz des Wirkstoffes A in einer Aufwandmenge von m g/ha oder in einer Konzentration von m ppm bedeutet,

Y den Abtötungsgrad, ausgedrückt in % der unbehandelten Kontrolle, beim Einsatz des Wirkstoffes B in einer Aufwandmenge von n g/ha oder in einer Konzentration von n ppm bedeutet und

E den Abtötungsgrad, ausgedrückt in % der unbehandelten Kontrolle, beim Einsatz der Wirkstoffe A und B in Aufwandmengen von m und n g/ha oder in einer Konzentration von m und n ppm bedeutet,

dann ist

$$E = X + Y - \frac{X \cdot Y}{100}$$

Ist der tatsächliche insektizide oder akarizide Abtötungsgrad größer als berechnet, so ist die Kombination in ihrer Abtötung überadditiv, d.h. es liegt ein synergistischer Effekt vor. In diesem Fall muss der tatsächlich beobachtete Abtötungsgrad größer sein als der aus der oben angeführten Formel errechnete Wert für den erwarteten Abtötungsgrad (E).

## Beispiel 1

Beispiel 1 beschreibt die Wirkung der erfindungsgemäßen Kombination gegen die Raupen des Eulenfalters *(Spodoptera exigua)* auf Nelken *(Dianthus caryophyllus)*. Azadirachtin wurde als NeemAzal® der Firma Trifolio GmbH eingesetzt. Der Versuch wurde nach EPPO-Richtlinen PP 1/152 (2), PP 1/181 (3), PP 1/135 (3) und PP 1/210 (1) mit 4 Wiederholungen zu je 10 Pflanzen durchgeführt. Zu Beginn der Infektion wurden die Pflanzen folgendermassen behandelt:

1. unbehandelt
2. Verbindung (I-1) als SL 200 (17 %ig), 150 g Wirkstoff/ha
3. Azadirachtin 30 g Wirkstoff/ha
4. Verbindung (I-1) als SL 200 + Azadirachtin, 150 + 30 g Wirkstoff/ha
5. Positive Kontrolle: Imidacloprid 100 g Wirkstoff/ha

Die Spritzlösung wurde hergestellt, indem handelsübliche Formulierungen gemischt und mit Wasser auf die genannte Konzentration eingestellt wurden. Die Applicationsmenge betrug 1000L/ha. Es wurden 3 Applikationen im Abstand von 10 - 14 Tagen durchgeführt. Bonitiert wurde der Frassschaden der Raupen an den Nelkenblättern im Wochenabstand. Die Ergebnisse sind in Tabelle 1 zusammengefasst

Tabelle 1: ***Wirksamkeit insektizider Behandlung gegen Spodoptera exigua bzgl. Fraßschaden an Nelken***

| **Testsubstanz** | **Tag 7** Reduktion des Frassschadens in % | **Tag 25** Reduktion des Frassschadens in % | **Tag 32** Reduktion des Frassschadens in % | **Tag 40** Reduktion des Frassschadens in % |
|---|---|---|---|---|
| Unbehandelt | 0 | 0 | 0 | 0 |
| (I-1) | 0 | 0 | 49 | 88 |
| Azadirachtin | 0 | 0 | 92 | 100 |
| (1-1) + Azadirachtin | 0 | 100 | 100 | 100 |
| Imidacloprid | 0 | 100 | 97 | 100 |

Aus der Tabelle wird deutlich, dass die Wirkstoffe Azadirachtin und Verbindung (I-1) einzeln am Tag 25 noch keine Wirkung entfalten. Erst am Tag 32 setzt die Wirkung hier ein. Für die Mischung von Azadirachtin und Verbindung (I-1) sieht man aber schon 100% Wirkung am Tag 25. Dieser Versuch verdeutlicht die Beschleunigung der Wirkung bei der Mischung im Vergleich zu den einzelnen Wirkstoffen.

**Beispiel 2 Angiessversuch gegen Käferlarven**

Käferlarven (Engerlinge) sind bedeutende Schädlinge im Rasen. Einerseits fressen sie die Wurzeln der Gräser und schädigen diese direkt, andererseits sind sie beliebtes Futter für Vögel, die auf der Suche nach Engerlingen die Grassnarbe zerstören. Zur Behandlung gegen Engerlinge werden befallene Rasenflächen üblicherweise mit insektiziden Mitteln begossen. Diese Art der Behandlung stellt das Beispiel 2 im Labor nach.

Zur Herstellung einer zweckmäßigen Wirkstoffzubereitung vermischt man eine handelsübliche Formulierung von Wirkstoff oder Wirkstoffkombination mit Wasser bis zum Erreichen der gewünschten Konzentration. Töpfe mit Erdsubstrat wurden mit folgenden Wirkstoffzubereitungen angegossen:

1. unbehandelt
2. Verbindung (I-1) als SL 200, 600 g Wirkstoff/ha
3. Azadirachtin, 60 g Wirkstoff/ha
4. Verbindung (I-1) als SL 200 + Azadirachtin, 600 + 60 g Wirkstoff/ha
5. Positive Kontrolle: Trichlorfon 4529 g Wirkstoff/ha

L3 Larven von *Cyclocephala immaculata* wurden auf die Töpfe gesetzt. Nach 1, 4, 7, 14 Tagen wurde die Überlebensrate bestimmt und daraus die Wirksamkeit der Mittel errechnet. 100% bedeutet, dass alle Engerlinge abgetötet wurden, 0% bedeutet keine Wirkung. Die Ergebnisse sind in Tabelle 2 zusammengefasst.

Tabelle 2: ***Wirksamkeit insektizider Giess-Behandlung gegen Cyclocephala immaculata***

| **Testsubstanz** | **Wirkung am Tag 1 in %** | **Wirkung am Tag 4 in %** | **Wirkung am Tag 7 in %** | **Wirkung am Tag 14 in %** |
|---|---|---|---|---|
| (I-1) | 0 | 28 | 0 | 29 |
| Azadirachtin | 0 | 0 | 0 | 7 |
| (I-1) + Azadirachtin gemessen | 0 | 39 | 43 | 57 |

(fortgesetzt)

| Testsubstanz | Wirkung am Tag 1 in % | Wirkung am Tag 4 in % | Wirkung am Tag 7 in % | Wirkung am Tag 14 in % |
|---|---|---|---|---|
| (I-1) + Azadirachtin berechnet | 0 | 28 | 0 | 34 |
| Trichlorfon | 0 | 17 | 29 | 50 |

Aus der Tabelle 2 wird deutlich, dass der Wirkstoff Azadirachtin über die gesamte Laufzeit keine Wirkung gegen Engerlinge hatte. An den Tagen 4, 7 und 14 sieht man einen deutlichen synergistischen Effekt. Dieser Versuch verdeutlicht die Erweiterung des Wirkspektums der Mischung im Vergleich zu den einzelnen Wirkstoffen.

**Beispiel 3**

**Phaedon cochleariae - Larven -Test**

| | | |
|---|---|---|
| Lösungsmittel: | 7 | Gewichtsteile Dimethylformamid |
| Emulgator: | 2 | Gewichtsteile Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration.
Kohlblätter *(Brassica oleracea)* werden durch Spritzen mit der Wirkstoffzubereitung in der gewünschten Konzentration behandelt und mit Larven des Meerrettichblattkäfers *(Phaedon cochleariae)* besetzt, solange die Blätter noch feucht sind.
Nach der gewünschten Zeit wird die Abtötung in % bestimmt. Dabei bedeutet 100 %, dass alle Käferlarven abgetötet wurden; 0 % bedeutet, dass keine Käferlarven abgetötet wurden. Die ermittelten Abtötungswerte verrechnet man nach der Colby-Formel.
Bei diesem Test zeigt die folgende Wirkstoffkombination gemäß vorliegender Anmeldung eine synergistisch verstärkte Wirksamkeit im Vergleich zu den einzeln angewendeten Wirkstoffen:

**Tabelle 3: Phaedon cochleariae Larven - Test**

| Wirkstoff | Konzentration | Abtötung in % nach 1d |
|---|---|---|
| (I-1) | 120 g ai/ha | 15 |
| Azadirachta indica | 20% | 0 |
| (I-1) + Azadirachta indica<br>erfindungsgemäß | 120 g + 20 % | gef.* 35 ber.** 15 |
| *gef.=gefundeneWirkung<br>** ber. = nach der Colby-Formel berechnete Wirkung | | |

**Beispiel 4**

**Diabrotica balteata -Test, Larven im Boden (DIABBA)**

Lösungsmittel: 4 Gewichtsteile Aceton

(fortgesetzt)

| | | |
|---|---|---|
| Emulgator: | 1 | Gewichtsteile Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Die Wirkstoffzubereitung wird mit Erde vermischt. Die angegebene Konzentration bezieht sich auf die Wirkstoffmenge pro Volumeneinheit Boden (mg/l = ppm). Man füllt den behandelten Boden in Töpfe und legt je Topf 5 Maiskörner aus. 3 Tage nach Aussaat werden Larven des Maiswurzelbohrers *(Diabrotica balteata)* in den behandelten Boden gesetzt.

Nach der gewünschten Zeit wird die Abtötung in % bestimmt. Der Wirkungsgrad berechnet sich aus der Anzahl der aufgelaufenen Maispflanzen.

Bei diesem Test zeigt die folgende Wirkstoffkombination gemäß vorliegender Anmeldung eine synergistisch verstärkte Wirksamkeit im Vergleich zu den einzeln angewendeten Wirkstoffen:

**Tabelle 4: Diabrotica balteata Larven - Test**

| Wirkstoff | Konzentration | Abtötung in % nach 5$^d$ | |
|---|---|---|---|
| (I-1) | 60 g ai/ha | 75 | |
| Azadirachta indica | 20% | 0 | |
| (I-1) + Azadirachta indica erfindungsgemäß | 60 g + 20% | gef.* 100 | ber.** 75 |
| *gef.=gefundeneWirkung<br>** ber. = nach der Colby-Formel berechnete Wirkung | | | |

**Patentansprüche**

1. Wirkstoffkombination enthaltend mindestens eine substituierte Enaminocarbonylverbindung der Formel (I-1), (1-2) oder (1-3)

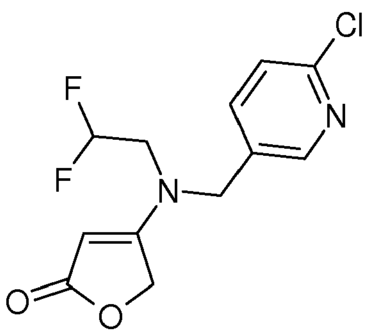

(I-1)

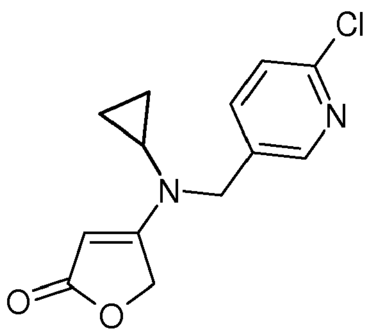

(I-2)

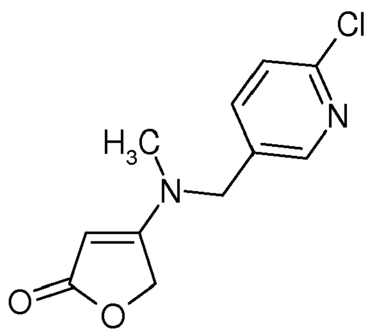

(I-3)

und Azadirachtin.

2. Wirkstoffkombination gemäß Anspruch 1, **dadurch gekennzeichnet, dass** das Azadirachtin in Form des reinen Wirkstoffes oder als Formulierung enthaltend Azadirachtin oder in Form von Extrakten der Samen des Neem-Baumes sowie deren Formulierungen enthalten ist.

3. Wirkstoffkombination gemäß Anspruch 1, **dadurch gekennzeichnet, dass** eine substituierte Enaminocarbonylverbindung 4-{[(6-Chlorpyrid-3-yl)methyl](2,2-difluorethyl)amino}-furan-2(5H)-on (Verbindung (I-1)) ist.

4. Wirkstoffkombination gemäß Anspruch 1, **dadurch gekennzeichnet, dass** das Azadirachtin einen Anteil von Azadirachtin A (Molekulargewicht 720,7 g/mol) von 20 % bis 50 % enthält.

5. Wirkstoffkombination gemäß Anspruch 1, **dadurch gekennzeichnet, dass** diese eine der Verbindungen der Formel (1-1), (1-2) oder (1-3) und Azadirachtin in einem Mischungsverhältnis im Bereich von etwa 125:1 bis etwa 1:125 enthält.

6. Formulierungen enthaltend die Wirkstoffkombination gemäß Anspruch 1.

7. Verfahren zur Bekämpfung von Insekten und Akariden,dadurch gekennzeichent, dass die Wirkstoffkombination gemäß Anspruch 1 auf die Pflanzen und Pflanzenteile mit und ohne Befall von Schädlingen ausgebracht wird.

8. Verfahren zur Bekämpfung von Insekten und Akariden, dadurch gekennzeichent, dass die Wirkstoffkombination gemäß Anspruch 1 in den die Pflanze umgebenen Lebensraum eingetragen wird.

9. Verfahren gemäß der Ansprüche 7 oder 8, **dadurch gekennzeichnet, dass** Pflanzen Zierpflanzen im Haus- und Garten sind.

10. Verwendung der Wirkstoffkombination gemäß Anspruch 1 zur Bekämpfung von Insekten und Akariden.

Europäisches Patentamt
European Patent Office
Office européen des brevets

# EUROPÄISCHER RECHERCHENBERICHT

Nummer der Anmeldung
EP 10 15 2723

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | EP 0 539 588 A1 (NIPPON SODA CO [JP]) 5. Mai 1993 (1993-05-05)<br>* Seite 16; Verbindungen 84, 88 *<br>----- | 1-10 | INV.<br>A01N43/40<br>A01N43/90<br>A01N65/00<br>A01P7/04 |
| A,D | WO 2007/115644 A1 (BAYER CROPSCIENCE AG [DE]; JESCHKE PETER [DE]; VELTEN ROBERT [DE]; SCH) 18. Oktober 2007 (2007-10-18)<br>* Seite 51; Beispiel 1; Verbindung 1 *<br>* Seite 58; Tabelle 1; Verbindung 16 *<br>* Seite 59; Verbindungen Ia-1 *<br>* Seite 39, Zeilen 18-20 *<br>----- | 1-10 | |
| A | WO 2009/043438 A1 (BAYER CROPSCIENCE AG [DE]; HUNGENBERG HEIKE [DE]; JESCHKE PETER [DE];) 9. April 2009 (2009-04-09)<br>* Seite 18; Verbindungen (I-9), (I-10) *<br>* Seite 43, Zeilen 8-10 *<br>----- | 1-10 | |
| A | EP 0 834 254 A1 (COUNCIL SCIENT IND RES [IN]) 8. April 1998 (1998-04-08)<br>* das ganze Dokument *<br>----- | 1-10 | |
| | | | RECHERCHIERTE SACHGEBIETE (IPC) |
| | | | A01N |

Der vorliegende Recherchenbericht wurde für alle Patentansprüche erstellt

2

| Recherchenort | Abschlußdatum der Recherche | Prüfer |
|---|---|---|
| München | 18. Juni 2010 | Galley, Carl |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 10 15 2723

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-06-2010

| Im Recherchenbericht angeführtes Patentdokument | Datum der Veröffentlichung | Mitglied(er) der Patentfamilie | Datum der Veröffentlichung |
|---|---|---|---|
| EP 0539588 A1 | 05-05-1993 | WO 9200964 A1 | 23-01-1992 |
| WO 2007115644 A1 | 18-10-2007 | AR 060185 A1 | 28-05-2008 |
| | | AU 2007236295 A1 | 18-10-2007 |
| | | CN 101466705 A | 24-06-2009 |
| | | DE 102006015467 A1 | 04-10-2007 |
| | | EP 2004635 A1 | 24-12-2008 |
| | | JP 2009531348 T | 03-09-2009 |
| | | KR 20080108310 A | 12-12-2008 |
| | | US 2009253749 A1 | 08-10-2009 |
| | | ZA 200808376 A | 25-11-2009 |
| WO 2009043438 A1 | 09-04-2009 | AR 068626 A1 | 25-11-2009 |
| | | AU 2008306243 A1 | 09-04-2009 |
| | | CA 2700484 A1 | 09-04-2009 |
| | | DE 102007045921 A1 | 02-04-2009 |
| EP 0834254 A1 | 08-04-1998 | DE 69626516 D1 | 10-04-2003 |
| | | DE 69626516 T2 | 20-11-2003 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0539588 A
- WO 2007115644 A
- WO 2009043443 A
- US 4272417 A
- US 4245432 A
- US 4808430 A
- US 5876739 A
- US 20030176428 A1
- WO 2002080675 A1
- WO 2002028186 A2


### In der Beschreibung aufgeführte Nicht-Patentliteratur


- Römpp Chemie Lexikon. Georg Thieme Verlag, 1991, 2954
- *Z. Naturforsch.,* 1987, vol. 42, 4
- **R. WEGLER.** Chemie der Pflanzenschutz- und Schädlingsbekämpfungsmittel. Springer Verlag, 1970, vol. 2, 401-412
- **S.R. COLBY.** *Weeds,* 1967, vol. 15, 20-22